# EUROPEAN PATENT APPLICATION

(11) **EP 4 692 386 A1**
(43) Date of publication of application: **11.02.2026**
(21) Application number: 24784722.1
(22) Date of filing: 19.03.2024
(51) Int. Cl.: C22B 26/22, B22D 21/04, C22B 7/00, C22B 9/16

(54) **RECYCLING FACILITY AND RECYCLING METHOD FOR MAGNESIUM ALLOY**

(30) Priority: 05.04.2023 JP 2023061421
(71) Applicant: The Japan Steel Works, Ltd., Tokyo 141-0032 (JP)
(72) Inventor: YAMAGUCHI Takeshi, Tokyo 141-0032 (JP); BUTANI Michio, Tokyo 141-0032 (JP); KAWABE Chikara, Tokyo 141-0032 (JP); MATSUZAKI Takahide, Tokyo 141-0032 (JP)
(74) Representative: Simmons & Simmons LLP (Munich)
(86) International application number: PCT/JP2024/010821
(87) International publication number: WO 2024/209931

(57) **Abstract**

Provided is a recycling facility for a magnesium alloy, with which it is possible to reduce the amount of a flame-proof gas used when melting the magnesium alloy, and which is excellent in terms of environmental aspects, safety aspects and cost aspects. Disclosed herein is a recycling facility for a magnesium alloy, having the following means. A melting means for melting magnesium alloy scraps in the presence of a noncombustible metal which is a main element other than magnesium and constitutes the magnesium alloy and which is noncombustible during the melting of the magnesium.

## Description

### TECHNICAL FIELD

The present invention relates to a recycling facility for a magnesium alloy and a recycling method for a magnesium alloy.

### BACKGROUND ART

As described in Non-Patent Document 1, unneeded parts (clean scrap) of magnesium injection-molded articles are collected by material manufacturers, re-melted and adjusted in composition, then chipped and reused for injection molding. Product parts of magnesium injection-molded articles are painted or otherwise surface-treated, used as products, and then collected separately. After the paint is removed, the separately collected product parts are re-melted and adjusted in composition in the same way as clean scrap, chipped, and reused for injection molding.

### CITATION LIST

### NON-PATENT LITERATURE

[NPTL1] "Recycling Technology for Magnesium Enclosures," Seikei Kakou (Molding and Processing), the Japan Society of Polymer Processing, 2004, vol. 16, no. 3, pp. 163-167.

### SUMMARY OF INVENTION

### TECHNICAL PROBLEM

Molten magnesium (molten metal) ignites and burns when exposed to the air. Therefore, when melting magnesium, the use of a flame-retardant gas is necessary to prevent magnesium from burning. SF₆ gas is the most commonly used flame-retardant gas. However, the global warming potential of SF₆ gas is extremely high at 23,900 times that of CO₂ gas, and its use is banned in some countries. While alternative flame-retardant gases such as HFC-134a and SO₂ gas are also used, they currently have issues related to environmental load, safety for humans, and cost.

The purpose of the present disclosure is to solve the above-mentioned problems and to provide a recycling facility and a recycling method for a magnesium alloy that can reduce the amount of flame-retardant gas used when melting the magnesium alloy and that is superior in terms of environmental aspects, safety aspects, and cost aspects.

### SOLUTION TO PROBLEM

A recycling facility for a magnesium alloy according to one embodiment of the present disclosure has the following means:
a melting means for melting magnesium alloy scrap in the presence of an incombustible metal that is a major element other than magnesium constituting the magnesium alloy and that is incombustible when magnesium is melted.

In addition, a recycling method for a magnesium alloy according to one embodiment of the present disclosure has the following step:
a melting step for melting magnesium alloy scrap in the presence of an incombustible metal that is a major element other than magnesium constituting the magnesium alloy and that is incombustible when magnesium is melted.

### ADVANTAGEOUS EFFECTS OF INVENTION

According to the present disclosure, it is possible to reduce the amount of flame-retardant gas used when melting a magnesium alloy and to provide a recycling facility and a recycling method for a magnesium alloy that are superior in terms of environmental aspects, safety aspects, and cost aspects.

### BRIEF DESCRIPTION OF DRAWINGS

[Fig. 1A] Fig. 1A is a recycling flow that includes a means for melting a magnesium alloy using flame-retardant gas.
[Fig. 1B] Fig. 1B is a recycling flow for one embodiment of the present disclosure.
[Fig. 2] Fig. 2 is a recycling flow for one embodiment of the present disclosure.
[Fig. 3] Fig. 3 is an Al-Mg binary state diagram.
[Fig. 4] Fig. 4 is a schematic front view of an injection molding machine. according to one embodiment of the present disclosure.
[Fig. 5A] Fig. 5A is a photograph of aluminum and magnesium alloy scrap fed into a graphite crucible.
[Fig. 5B] Fig. 5B is a photograph showing aluminum and magnesium alloy scrap melting in a graphite crucible.
[Fig. 5C] Fig. 5C is a photograph showing molten metal being cast into a mold.
[Fig. 5D] Fig. 5D is a photograph showing a cross section of an Al₁₂Mg₁₇ ingot obtained in the examples.
[Fig. 6] Fig. 6 shows the result of XRD analysis of the Al₁₂Mg₁₇ ingot obtained in the examples.
[Fig. 7] Fig. 7 are photographs of a granular raw material obtained by crushing an Al₁₂Mg₁₇ ingot with a hammer.
[Fig. 8] Fig. 8 is an Al-Mg binary state diagram noting the component ratios of aluminum and magnesium in the melting step in the examples, as well as the AM60B chips used in the composition adjustment step and the AZ91D obtained as a recycled product.

### DESCRIPTION OF EMBODIMENTS

### Recycling Facility for Magnesium Alloy

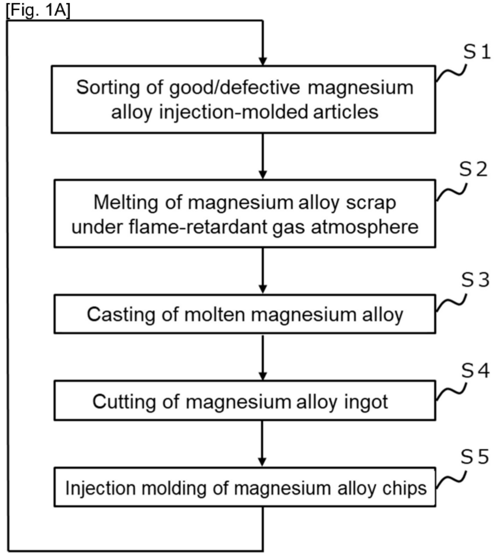

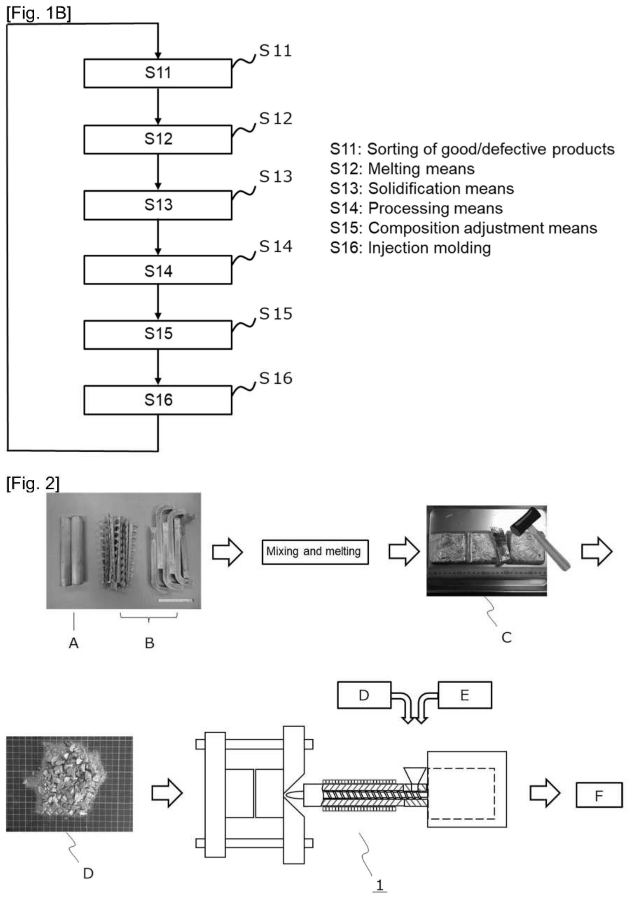

A recycling facility for a magnesium alloy according to one embodiment of the present disclosure has at least the following means:
a melting means for melting magnesium alloy scrap in the presence of an incombustible metal that is a major element other than magnesium constituting the magnesium alloy and that is incombustible when magnesium is melted. The recycling flow of the magnesium alloy according to the present embodiment is described below with reference to Figs. 1A, 1B, and 2.

Fig. 1A is a recycling flow of a magnesium alloy that includes a means for melting a magnesium alloy using flame-retardant gas. Fig. 1B is a recycling flow of a magnesium alloy for one embodiment of the present disclosure and Fig. 2 is a recycling flow that more specifically describes each of the means of the recycling flow shown in Fig. 1B, along with photographs and diagrams.

The recycling flow shown in Fig. 1A first has a step S1 in which magnesium alloy (AZ91D) injection-molded articles obtained by injection molding are gate-cut to sort good and defective parts. In the subsequent melting step S2, defective magnesium alloy scrap and parts other than the product parts obtained in step S1 are melted alone, a process that requires the use of flame-retardant gas. Next, the molten magnesium alloy obtained by melting is cast and solidified to obtain a magnesium alloy ingot (step S3). The ingot is then cut (step S4), and the obtained magnesium chips are used as a material for injection molding (step S5), whereby the magnesium alloy scrap is recycled into magnesium alloy injection-molded articles.

On the other hand, as shown in Figs. 1B and 2, the recycling flow according to the present embodiment includes a melting step (melting means) S12 that follows step S11 (step S11 corresponding to step S1 in Fig. 1A) for adding aluminum to defective magnesium alloy scrap and parts other than the product parts obtained in step S11 and melting the mixture. According to this melting step S12, aluminum can be melted at a Mg/Al ratio that does not burn, and the amount of flame-retardant gas used can be reduced.

By adjusting the Mg/Al ratio to an appropriate range, intermetallic compounds such as Al₁₂Mg₁₇ are formed. Accordingly, an Al-Mg ingot obtained by casting and solidifying the molten metal containing the magnesium alloy scrap and aluminum in solidification step (solidification means) S13 contains intermetallic compounds. Since intermetallic compounds are brittle and easily crushed, the resulting Al-Mg ingot can be easily crushed and processed into a granular form by simply crushing it in the subsequent processing step (processing means) S14, using, for example, a hammer or other impact means.

Finally, after passing through the composition adjustment step (composition adjustment means) S15 in which the Al-Mg intermetallic compound (Al₁₂Mg₁₇) particles obtained by the above-mentioned crushing and magnesium alloy chips (for example, AM60B) are mixed at a ratio that achieves a final target composition, and injection molding is performed using the composition-adjusted material as a material (step S16). As a result, magnesium alloy scrap is recycled into a magnesium alloy injection-molded article. Thus, according to the present embodiment, the amount of flame-retardant gas used during melting of magnesium alloy can be reduced. Furthermore, by adjusting the Mg/Al ratio during melting to an appropriate range, an ingot containing an intermetallic compound can be obtained that can be easily crushed. Consequently, according to the present embodiment, the labor and cost of cutting the ingot required in the recycling flow shown in Fig. 1A can be eliminated. Each means (step) of the recycling facility according to the present embodiment is next explained in detail.

### Melting Means

As described above, magnesium ignites and burns when melted in the air. In the present embodiment, therefore, magnesium alloy scrap is not melted by itself, but is melted together with a metal that is a major element other than magnesium constituting the magnesium alloy and that is incombustible when magnesium is melted (also referred to as "an incombustible metal"). As a result, the present embodiment can reduce the amount of flame-retardant gas used when melting magnesium alloy.

### Magnesium Alloy Scrap

Magnesium alloy scrap refers to parts that are unnecessary when manufacturing magnesium alloy injection-molded articles, such as the runner portion that is present in the runner during injection molding (parts other than the product parts) or in defective products. Magnesium alloy scrap may be magnesium alloy that has become unnecessary and that is discharged when recycling products using magnesium alloy, or magnesium alloy that should be recycled. Magnesium alloys are not particularly limited and may include Mg-Al alloys, Mg-Al-Zn alloys, Mg-Zn alloys, Mg-Zn-Zr alloys, Mg-Cu-Zn alloys, Mg-rare earth element alloys, Mg-rare earth element-Zr alloys, and Mg-Al-Si alloys. More specifically, examples of magnesium alloys include AZ91D, AM60B, AM50A, AE42, and AS41, among which AZ91D is the most commonly used.

### Incombustible Metal

An incombustible metal according to the present disclosure is a metal that is a major element other than magnesium constituting the magnesium alloy and that is incombustible when magnesium is melted. Here, the major element other than magnesium constituting the magnesium alloy means an element having the largest component ratio next to magnesium among the elements constituting the magnesium alloy. Specifically, the major elements other than magnesium that constitute magnesium alloys as described above include aluminum, zinc, zirconium, copper, rare-earth elements, silicon, and manganese. Among these, aluminum or zinc is preferred as an incombustible metal, i.e., a metal that is incombustible when magnesium is melted, and aluminum is more preferred.

### Component Ratio of Magnesium and Incombustible Metal

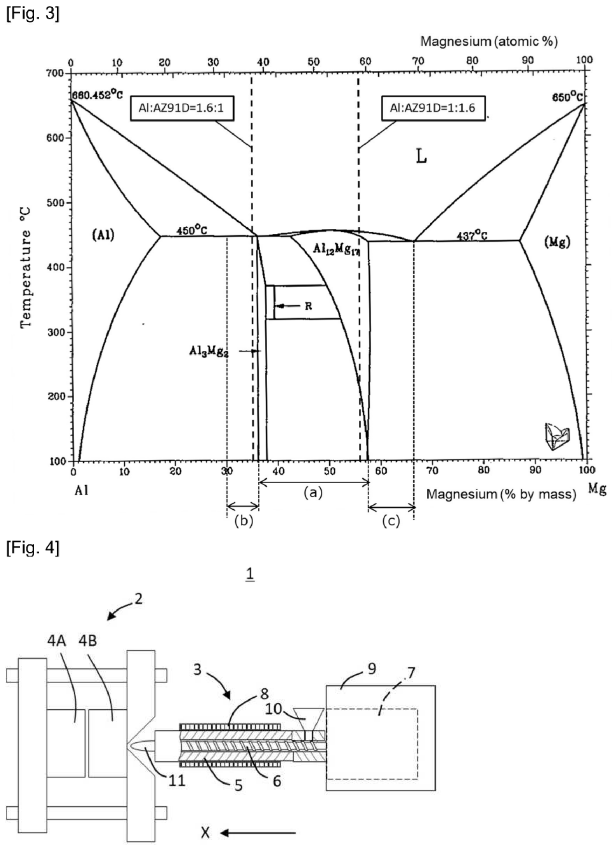

The component ratio of magnesium and aluminum when aluminum is used as an incombustible metal is explained below with reference to the Al-Mg binary state diagram shown in Fig. 3.

According to the Al-Mg binary state diagram shown in Fig. 3, the intermetallic compound Al₁₂Mg₁₇ is formed when the aluminum ratio is 42% by mass or more (magnesium ratio is 58% by mass or less). The "aluminum ratio" in the present disclosure means the mass proportion of aluminum with respect to the total mass of magnesium and aluminum, including aluminum in the magnesium alloy scrap. When the amount of aluminum is further increased, Al₃Mg₂ is also formed in addition to Al₁₂Mg₁₇. Specifically, Al₃Mg₂ is formed at an aluminum ratio of 62% by mass to 64% by mass (magnesium ratio of 36% by mass to 38% by mass). Therefore, to obtain a product that contains an intermetallic compound as a main component, the magnesium alloy scrap and aluminum are preferably mixed such that the aluminum ratio falls within the range shown in Fig. 3(a), i.e., an aluminum ratio of 42% by mass to 64% by mass (magnesium ratio of 36% by mass to 58% by mass).

The binary state diagram shows the ratio of each component in an equilibrium state. However, in cases such as non-equilibrium states, the ratio of each component may deviate from the values shown in the binary state diagram. Therefore, the component ratio (percentage) of magnesium and an incombustible metal in the present disclosure refers to the component ratio (percentage) in an equilibrium state. The range of component ratio (percentage) of magnesium and an incombustible metal for the present disclosure is based on the numerical values read from the binary state diagram and is intended to include a margin of ±1% around the stated values, unless otherwise noted. That is, for example, "42% by mass to 64% by mass" is intended to mean "about 42% by mass to about 64% by mass," where "about" means an inclusion of ±1% around the specified value.

Even if the aluminum ratio is higher or lower than the above range (42% by mass to 64% by mass), if the proportion of intermetallic compounds in the product is high, the product is considered to exhibit properties similar to those of an intermetallic compound.

Specifically, when the aluminum ratio is increased beyond 64% by mass, aluminum (Al) is formed in addition to Al₃Mg₂. If only the flame-retardant effect is considered, there is no problem in diluting the magnesium alloy scrap until the aluminum ratio reaches, for example, 99% by mass. Therefore, from the viewpoint of the flame-retardant effect, the aluminum ratio may exceed 64% by mass and reach as high as 99% by mass (100% by mass is excluded). However, as the aluminum ratio increases, the amount of aluminum required also increases. Furthermore, when the aluminum ratio is extremely high, the target final composition can be achieved by adding only a small amount of remelted ingot during the component adjustment step described below in which the remelted ingot is mixed with the magnesium alloy. Accordingly, the aluminum ratio should preferably not be excessively high from the viewpoint of achieving uniform mixing.

On the other hand, within the range shown in Fig. 3(b), that is, even when the aluminum ratio exceeds 64% by mass, as long as it is 70% by mass or less (with the magnesium ratio being less than 36% by mass but 30% by mass or more), the amount of Al₃Mg₂ formed relative to Al becomes sufficiently high, and the resulting ingot is more likely to exhibit the characteristics of an intermetallic compound.

Based on the above, the aluminum ratio is preferably 70% by mass or less (with the magnesium ratio being 30% by mass or more). Furthermore, considering ease of crushing in the processing step (to be described), the resulting ingot obtained in the subsequent step preferably does not contain Al, which has ductility. Therefore, the aluminum ratio is more preferably 64% by mass or less (with the magnesium ratio being 36% by mass or more) to suppress the formation of Al. However, as demonstrated by the results of Example 4 (to be described), even when the aluminum ratio is 65% by mass, the effect of reducing the amount of flame-retardant gas used in the present disclosure can be sufficiently achieved. Accordingly, the aluminum ratio in the present embodiment can also be more preferably 65% by mass or less (with the magnesium ratio being 35% by mass or more).

When the aluminum ratio is decreased from 42% by mass, Mg is formed in addition to Al₁₂Mg₁₇. However, within the range shown in Fig. 3(c), that is, even when the aluminum ratio is less than 42% by mass but 33% by mass or more (and the magnesium ratio exceeds 58% by mass but is 67% by mass or less), the formation of Mg is suppressed and the resulting ingot is likely to exhibit the characteristics of an intermetallic compound, i.e., being brittle and easily crushed. From the viewpoint of flame-retardant properties, although the flame-retardant effect increases as the aluminum ratio in the molten state increases, the use of flame-retardant gas can be greatly reduced when the aluminum ratio is 33% by mass or more. On the other hand, even when the aluminum ratio is less than 33% by mass, excellent flame-retardant properties are exhibited compared to a case where no aluminum is added at all or when using AZ91D, a general-purpose magnesium alloy containing 9% by mass of aluminum, and these properties allow for a reduction in the amount of flame-retardant gas used. Based on the above points, the aluminum ratio is preferably 33% by mass or more (with the magnesium ratio being 67% by mass or less), and more preferably 42% by mass or more (with the magnesium ratio being 58% by mass or less).

As described above, in the melting means, the amounts of magnesium alloy scrap and aluminum to be mixed are appropriately adjusted according to the ratio of aluminum and magnesium in the used magnesium alloy scrap such that the aluminum ratio preferably falls within the above range. Although the above explanation refers to a case in which aluminum is used as the incombustible metal, when, for example, zinc is used as the incombustible metal, the preferred zinc ratio can also be determined based on the same theory as described above.

### Procedure of Melting Step

In the melting step using a melting means, magnesium alloy scrap is melted in the presence of an incombustible metal. Here, melting magnesium alloy scrap in the presence of an incombustible metal is intended to exclude an embodiment in which magnesium alloy scrap is melted by itself. That is, it is sufficient that the incombustible metal be present together with the magnesium alloy scrap during melting. As the melting means, for example, a heat-resistant container such as a crucible may be used and the melting step is carried out while stirring, as necessary. The material of the crucible is not particularly limited provided that it can withstand the melting of magnesium and incombustible metals; examples include graphite crucibles and cast steel crucibles, which may be used. A flux for refining may be used during melting, if necessary.

In the melting step, magnesium alloy scrap may be fed into the crucible in which an incombustible metal is being melted, or the two may be mixed in the crucible and then melted together. However, the melting point of AZ91D, which is an example of a magnesium alloy, is 595°C, whereas the melting point of aluminum, which is preferably used as an incombustible metal, is 660°C. Therefore, if melting is started with both the magnesium alloy scrap and aluminum charged together in the crucible, the magnesium will melt first, leading to a risk of ignition. Accordingly, the melting means is preferably a means for first melting only aluminum (incombustible metal) by itself in advance, and then charging the magnesium alloy scrap into the molten aluminum (incombustible metal). According to this method, premature melting of magnesium (incombustible metal) alone can be suppressed, thereby further reducing the risk of magnesium combustion.

It should be noted that moisture may be entrapped in or may adhere to the magnesium alloy scrap. In such cases, the molten metal may spatter when the magnesium alloy scrap is charged into the molten aluminum (incombustible metal). Therefore, from the standpoint of safety, the magnesium alloy scrap is preferably used after removing the moisture, for example, by preheating, as necessary. In addition, the melting step may be carried out under a flow of an inert gas such as nitrogen or argon to suppress the occurrence of ignition sources on the surface of the molten metal.

The molten state of aluminum and the magnesium alloy scrap after being melted together can be maintained by keeping the temperature slightly higher than the melting point of Al₁₂Mg₁₇ (approximately 450°C) or the like that is generated. Therefore, after aluminum and the magnesium alloy scrap have been melted together, the temperature may be lowered to, for example, about 500°C to stabilize and homogenize the melt. Alternatively, when steps for stabilization or homogenization are not required, the magnesium alloy scrap may be fed into the molten aluminum, stirred lightly when both are mixed and melted, and then immediately cast into a mold to produce an ingot or proceed to the next step.

### Solidification Means

The recycling facility according to the present embodiment may have a solidification means for solidifying a mixed molten material of an incombustible metal and the magnesium alloy scrap obtained through the melting means to obtain a raw material containing an intermetallic compound of the incombustible metal and magnesium (hereinafter also referred to as an "M1-Mg intermetallic compound").

Specifically, the solidification means may be a casting means for casting the mixed molten material to obtain, as a raw material containing an M1-Mg intermetallic compound, an M1-Mg ingot containing the M1-Mg intermetallic compound. In one embodiment of the casting means, molten metal containing the magnesium alloy scrap and aluminum, which is an example of an incombustible metal, is poured into a mold and solidified to obtain an Al-Mg ingot. As described above, when the aluminum ratio in the melting step is 33% by mass to 70% by mass, the resulting Al-Mg ingot contains an Al-Mg intermetallic compound. Furthermore, when the aluminum ratio is 42% by mass to 64% by mass (or 65% by mass), an Al-Mg ingot containing an Al-Mg intermetallic compound as a major component is obtained. In the present disclosure, "containing as a major component" means that the relevant component is contained in an amount of 50% by mass or more with respect to the total amount of the object, the amount being, for example, 60% by mass or more, 70% by mass or more, 80% by mass or more, or 90% by mass or more, and also includes a case in which the object substantially consists of 100% by mass of the component.

The fact that the Al-Mg ingot obtained through the solidification means contains the Al-Mg intermetallic compound can be confirmed, for example, by performing an XRD analysis.

The solidification means may also be a means for rapidly cooling and solidifying the mixed melt by, for example, dropping the mixed melt onto a rotating roll or into water. Specifically, the mixed melt may be supplied, for example, between a pair of rotating rolls and processed into a sheet to obtain a raw material in the form of a sheet as a material containing the M1-Mg intermetallic compound. Furthermore, the solidification means may be provided with a processing means in a subsequent stage for cutting and crushing the sheet-shaped raw material to process it into a granular raw material. In the present disclosure, the term "granular" includes any of granular, particulate, chip-shaped, and paste-like forms, as long as the shape is suitable for use as a raw material for injection molding.

### Component Adjustment Means

The recycling facility according to the present embodiment may have a composition adjustment means for mixing and melting the raw material containing an M1-Mg intermetallic compound obtained through the solidification means and a magnesium alloy having a lower aluminum content than the final target composition for recycling the raw material and the magnesium alloy into a magnesium alloy having the aluminum content of the final target composition.

In the melting means described above, the magnesium alloy scrap is diluted with aluminum. Therefore, the raw material containing an M1-Mg intermetallic compound that has been subjected to the solidification means has a lower magnesium ratio and a higher aluminum ratio than the magnesium alloy scrap used as a recycled raw material. Accordingly, a magnesium alloy having the aluminum content of the final target composition can be obtained by mixing and melting the raw material containing the M1-Mg intermetallic compound and the magnesium alloy having a lower aluminum content than the final target composition. The final target composition may be, for example, the same composition as the magnesium alloy scrap serving as the recycled raw material or may be set as any desired composition as appropriate.

The magnesium alloy having a lower aluminum content than the final target composition used for component adjustment is not particularly limited and can be selected as appropriate in accordance with the final target composition. Examples of such magnesium alloys include commercially available chips such as AM60B and AZ61 that contain 6% by mass of aluminum, and AM50A that contains 5% by mass of aluminum. The amount of the magnesium alloy used for component adjustment may be appropriately determined in consideration of the final target composition.

The raw material containing the M1-Mg intermetallic compound obtained through the solidification means may be, for example, the Al-Mg ingot itself or may be a granular raw material containing the M1-Mg intermetallic compound such as Al-Mg particles or Al-Mg chips obtained by appropriately processing the raw material containing the M1-Mg intermetallic compound.

### Processing Means

Specifically, the recycling method according to the present embodiment may have a processing means for processing the raw material containing the M1-Mg intermetallic compound, such as an Al-Mg ingot obtained through the solidification means, into a granular form by crushing or cutting to obtain a granular raw material containing the M1-Mg intermetallic compound. When the Al-Mg ingot obtained through the solidification means (casting means) contains an Al-Mg intermetallic compound, and especially when the Al-Mg intermetallic compound is the major component of the ingot, the ingot is brittle and can be easily processed into a granular form by using an impact means such as a hammer or a press. Of course, the ingot may also be granulated by machining such as cutting as a processing means. However, the Al-Mg ingot containing the Al-Mg intermetallic compound according to one embodiment of the present disclosure does not require machining such as cutting and can be processed into Al-Mg particles containing the Al-Mg intermetallic compound as a granular raw material by manually crushing with an impact means such as a hammer.

The above composition adjustment means may also be an injection molding means whereby an injection molding machine, by injection molding, mixes and melts the granular raw material containing an M1-Mg intermetallic compound such as Al-Mg particles obtained through the processing means with magnesium alloy chips having a lower aluminum content than the final target composition. By this means, a magnesium alloy injection-molded article having the aluminum content of the final target composition can be obtained as a recycled product.

Fig. 4 shows a schematic front view of injection molding machine 1 according to one embodiment of the present disclosure. As shown in Fig. 4, injection molding machine 1 includes a mold clamping device 2 that clamps a mold and an injection device 3 that heats and melts the material to be injected and then injects the material. According to the injection molding machine shown in Fig. 4, mold clamping device 2 has two molds 4A and 4B on the left and right sides, respectively, of the drawing. Injection device 3 has cylinder 5, screw 6 housed in cylinder 5, and drive mechanism 7 that drives screw 6. Heater 8 is arranged around cylinder 5 for heating cylinder 5. Screw 6 is rotated and driven in the direction of arrow X by drive mechanism 7. Drive mechanism 7 is covered by cover 9. In the vicinity of the rear end portion of cylinder 5, hopper 10 is provided for supplying the material to be injected. At the tip end of cylinder 5, injection nozzle 11 is provided for supplying the injection material into a cavity, which is a space inside the mold formed by the two molds 4A and 4B.

Using injection molding machine 1 of this configuration, a granular raw material containing an M1-Mg intermetallic compound and magnesium alloy chips having a lower aluminum content than the final target composition are supplied from hopper 10. The supplied materials are heated and melted by both heat from heater 8 and shear heat generated by the rotation of screw 6. The mixed and melted material is then injected from the tip of injection nozzle 11 into the gap inside the mold. The mold is then cooled to a temperature not higher than a solidification temperature of the mixed and melted materials to obtain a recycled product, i.e., a magnesium alloy injection-molded article inside the mold.

### Recycling Method for Magnesium Alloy

A recycling method for a magnesium alloy according to one embodiment of the present disclosure has at least the following step: a melting step for melting magnesium alloy scrap in the presence of an incombustible metal that is a major element other than magnesium that constitutes the magnesium alloy and that is incombustible when magnesium is melted.

The recycling method for a magnesium alloy according to one embodiment of the present disclosure may further have one or more steps selected from the following: a solidification step for solidifying a mixed molten material of an incombustible metal and the magnesium alloy scrap obtained through the melting step to obtain a raw material containing an M1-Mg intermetallic compound; a composition adjustment step for mixing and melting the raw material containing an M1-Mg intermetallic compound obtained through the solidification step and a magnesium alloy having a lower aluminum content than a final target composition for recycling the raw material and the magnesium alloy into a magnesium alloy having the aluminum content of the final target composition; and a processing step for processing the raw material containing the M1-Mg intermetallic compound obtained through the solidification step into a granular form by crushing, cutting, or the like to obtain a granular raw material containing the M1-Mg intermetallic compound.

The solidification step may be a casting step for casting the mixed melt of an incombustible metal and magnesium alloy scrap to obtain an M1-Mg ingot containing an M1-Mg intermetallic compound. The solidification step may also be a step for rapidly cooling and solidifying the mixed melt by, for example, dropping the mixed melt onto a rotating roll or into water. After the solidification step, a granular raw material containing an M1-Mg intermetallic compound can be obtained by performing the processing step. In this case, the component adjustment step may be an injection molding step in which an injection molding machine is used to mix and melt, by injection molding, the granular raw material containing the M1-Mg intermetallic compound, such as Al-Mg particles obtained through the processing step and magnesium alloy chips having a lower aluminum content than the final target composition. As a result, a magnesium alloy injection-molded article having the aluminum content of the final target composition is obtained as a recycled product.

Each of the above steps included in the recycling method according to the present disclosure is a step of carrying out a desired procedure using the corresponding means included in the recycling facility according to the present disclosure described above. Therefore, each of the above-described corresponding means of the recycling facility according to the present disclosure can be appropriately read as corresponding steps and applied to the recycling method according to the present disclosure, and detailed description thereof is omitted.

### EXAMPLES

### Examples 1 to 3

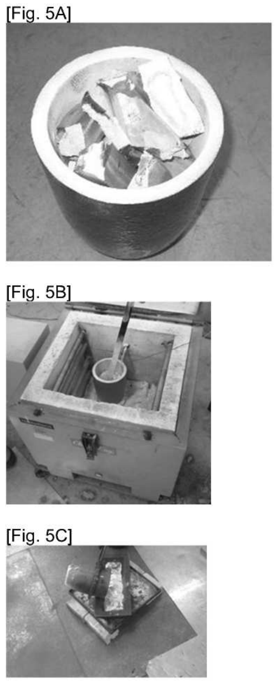

According to the recycling flow shown in Figs. 1B and 2, a recycling method for a magnesium alloy according to Examples 1 to 3 was carried out. Figs. 5A to 5D are photographs showing the states in which respective steps were carried out. As the magnesium alloy scrap serving as a recycled raw material, a runner portion, from which a product portion was removed, of an injection-molded article of an AZ91D magnesium alloy containing 9% by mass of aluminum (trade name: TM Crimp, manufactured by CHUOKOSAN CO., LTD.) was used. As the aluminum, an A1070 aluminum alloy round bar (φ50 mm) having an aluminum content of 99.7% by mass or more (regarded as 100% by mass of aluminum), which is a pure aluminum-based material, was used.

### Melting Step

A total of 900 g of material was charged into a graphite crucible such that the mass ratio of A1070 aluminum alloy A (aluminum ratio: 100% by mass) and AZ91D magnesium alloy scrap B (aluminum ratio: 9% by mass) was 1:1.6 and was heated in a crucible furnace up to 700°C (Fig. 5A and Fig. 5B). In the mixed and melted state at this time, the aluminum ratio with respect to the total amount of magnesium and aluminum, including aluminum in the magnesium alloy scrap, was 44% by mass. The melting step was carried out under three conditions: that nothing was added during melting (Example 1), that only chloride-based flux for refining was added during melting (Example 2), and that argon gas was caused to flow onto the surface of molten metal in addition to the addition of the flux during melting (Example 3). The results are shown in Table 1. As shown in Table 1, in Example 3 in which argon gas was caused to flow, no ignition source at all was generated. In Examples 1 and 2, although slight ignition sources were generated on the surface of the molten metal, no phenomenon was observed in which combustion successively occurred as in the case of melting magnesium alloy in the atmosphere.

### Casting Step

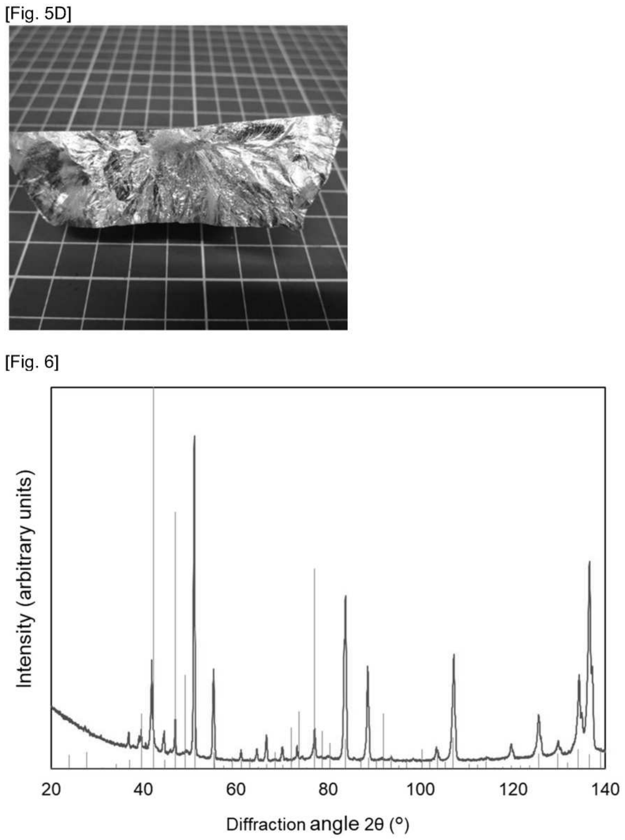

After removing, as appropriate, ignition sources on the surface of the molten metal and lightly stirring, the molten metal was cast in a cast iron mold (Fig. 5C), cooled, and solidified to obtain an Al-Mg ingot C mainly composed of Al₁₂Mg₁₇, which is an intermetallic compound. Fig. 5D is a photograph showing a cross-section of the obtained Al₁₂Mg₁₇ ingot. The obtained ingot was subjected to XRD analysis (target: Co, acceleration voltage: 45 kV, beam current: 40 mA) to obtain the results shown in Fig. 6. As shown in Fig. 6, diffraction peaks of the obtained ingot coincided with known peaks of Al₁₂Mg₁₇, whereby the formation of Al₁₂Mg₁₇, which is an intermetallic compound, was confirmed.

### Processing Step

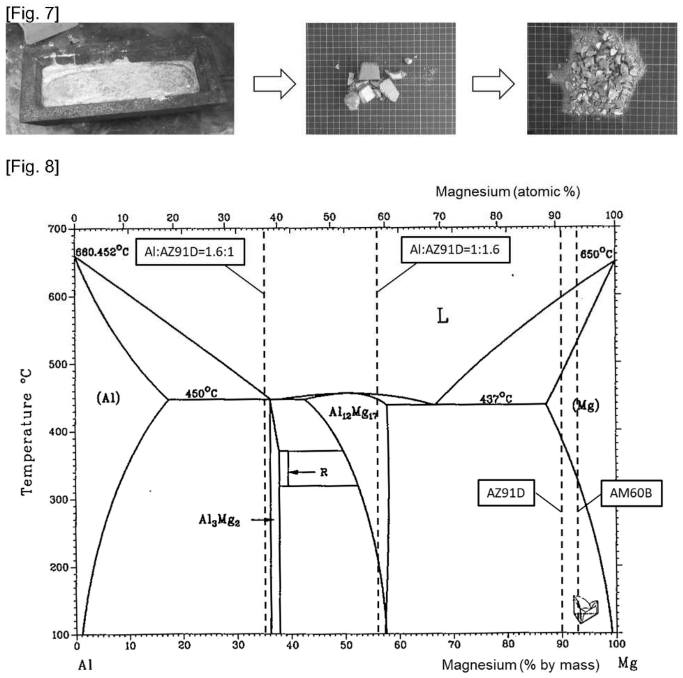

Al₁₂Mg₁₇, an intermetallic compound, is extremely brittle, and manually crushing the obtained Al-Mg ingot with a hammer easily produced a granular form, as shown in Fig. 7. In the processing step , the Al-Mg ingot was crushed in this way to 10 mm or less and sieved to remove fine powder to obtain Al-Mg (Al₁₂Mg₁₇) particles D (aluminum ratio: 44% by mass) as a granular raw material. For comparison, neither AZ91D magnesium alloy nor A1070 aluminum alloy could be crushed when struck with a hammer.

### Component Adjustment Step

Al-Mg (Al₁₂Mg₁₇) particles D obtained in the processing step and commercially available AM60B magnesium alloy chips E containing 6% by mass of aluminum (trade name: TM Crimp, manufactured by CHUOKOSAN CO., LTD.) were weighed such that the mass ratio of Al₁₂Mg₁₇:AM60B = 7.9:92.1, and were thoroughly mixed in a container. The mixed chips were charged from a hopper of a magnesium injection molding machine 1 (trade name: JLM280-MGlle, manufactured by THE JAPAN STEEL WORKS, LTD.), and were injection-molded (cylinder temperature: 610°C). As a result, the two materials were mixed and melted in the cylinder and rapidly injected into a mold, whereby a recycled injection-molded article of an AZ91D magnesium alloy F containing 9% by mass of aluminum was obtained. The cylinder temperature may also be higher than 615°C, which is the liquidus line of AM60B. In addition, since Al₁₂Mg₁₇ melts at 450°C and AM60B also starts melting from its solidus line temperature of 540°C, a setting at 600°C, which is the complete melting temperature of AZ91D, or even a semi-melting temperature not higher than 600°C may also be adopted.

### Example 4

The melting step, casting step, and processing step were carried out in the same manner as in Example 3 with the exception that A1070 aluminum alloy A and AZ91D magnesium alloy scrap B were melted such that the mass ratio became 1.6:1, that is, such that the ratio of aluminum with respect to the total mass of magnesium and aluminum became 65% by mass. The results are shown in Table 1. As a result, neither combustion nor ignition sources were observed. In the casting step, an ingot mainly composed of Al₃Mg₂, which is an intermetallic compound, was obtained. Manually crushing this ingot with a hammer easily produced a granular form.

**[Table 1]**

| | Mixing Ratio (mass ratio) | | composition ratio (% by mass) | | Melting Condition | Combustion | Hammer Crushing |
|---|---|---|---|---|---|---|---|
| | A1070 | AZ91D | Al | Mg | | | |
| Example 1 | 1 | 1.6 | 44 | 56 | 700°C, in the atmosphere | only partial ignition source | possible |
| Example 2 | 1 | 1.6 | 44 | 56 | 700°C, in the atmosphere + flux | only partial ignition source | possible |
| Example 3 | 1 | 1.6 | 44 | 56 | 700°C, Ar gas + flux | none | possible |
| Example 4 | 1.6 | 1 | 65 | 35 | 700°C, Ar gas + flux | none | possible |

The ignition source observed at certain points on the surface of the molten metal during the melting steps of Examples 1 and 2 can be suppressed by a flow of inert gas such as argon. In these cases, however aluminum and magnesium alloy scrap were heated simultaneously without stirring during the temperature increase, causing the lighter magnesium to segregate toward the top, and this segregation is believed to have produced the ignition source. As a result, first melting only aluminum and then adding the magnesium alloy scrap to melt the magnesium as described above can prevent ignition sources. In addition, once the mixture has been mixed and melted at the melting point of aluminum at 650°C or higher, immediately lowering the melting temperature to around 500°C, which is slightly higher than the melting point of the Al-Mg intermetallic compound at 450°C, can prevent partial ignition of magnesium.

The results of the examples are next discussed with reference to the Al-Mg binary state diagram shown in Fig. 8. In the melting step of Examples 1 to 3, A1070 aluminum alloy and AZ91D magnesium alloy scrap were mixed at a mass ratio of 1:1.6, resulting in an aluminum ratio of 44% by mass (magnesium ratio: 56% by mass). As can be seen from Fig. 8, at this aluminum ratio, the intermetallic compound Al₁₂Mg₁₇ is mainly formed, and as described above, an Al-Mg ingot mainly composed of Al₁₂Mg₁₇ could be produced. In the composition adjustment step, a magnesium alloy injection-molded article having the final target composition was then obtained by mixing and melting the crushed granular raw material of the ingot and the magnesium alloy chips (aluminum: 6% by mass) having a lower aluminum content than the final target composition (aluminum: 9% by mass).

In the melting step of Example 4, A1070 aluminum alloy and AZ91D magnesium alloy scrap were mixed at a mass ratio of 1.6:1, resulting in an aluminum ratio of 65% by mass (magnesium ratio: 35% by mass). As can be seen from Fig. 8, at this aluminum ratio, the intermetallic compound Al₃Mg₂ is mainly formed, and as described above, an Al-Mg ingot mainly composed of Al₃Mg₂ could be produced.

The present specification includes the following disclosures:

### [Configuration 1]

A recycling facility for a magnesium alloy, the recycling facility comprising:
(a) a melting means for melting magnesium alloy scrap in the presence of an incombustible metal that is a major element other than magnesium constituting the magnesium alloy and that is incombustible when magnesium is melted.

### [Configuration 2]

The recycling facility for a magnesium alloy according to configuration 1, wherein the incombustible metal is selected from a group consisting of aluminum and zinc.

### [Configuration 3]

The recycling facility for a magnesium alloy according to configuration 2, wherein the incombustible metal is aluminum.

### [Configuration 4]

The recycling facility for a magnesium alloy according to configuration 3, wherein the melting means is a means for melting aluminum and the magnesium alloy scrap such that the mass proportion of aluminum with respect to the total mass of magnesium and aluminum, including aluminum in the magnesium alloy scrap, is 33% by mass or more.

### [Configuration 5]

The recycling facility for a magnesium alloy according to configuration 4, wherein the mass proportion of aluminum with respect to the total mass of magnesium and aluminum is 33% by mass to 70% by mass.

### [Configuration 6]

The recycling facility for a magnesium alloy according to configuration 4 or 5, the recycling facility further comprising:
(b) a solidification means for solidifying a mixed molten material of aluminum and the magnesium alloy scrap that has been subjected to the melting means to obtain a raw material containing an Al-Mg intermetallic compound.

### [Configuration 7]

The recycling facility for a magnesium alloy according to configuration 6, wherein
the solidification means is a means for solidifying the mixed molten material of aluminum and the magnesium alloy scrap by dropping the mixed molten material onto a rotating roll or into water, and wherein
the recycling facility further comprises:
   (c) a processing means for processing the raw material containing the Al-Mg intermetallic compound to obtain a granular raw material containing the Al-Mg intermetallic compound; and
   (d) a composition adjustment means for mixing and melting the granular raw material and magnesium alloy chips having a lower aluminum content than a final target composition by injection molding to recycle the granular raw material and the magnesium alloy chips into a magnesium alloy injection-molded article having the aluminum content of the final target composition.

### [Configuration 8]

The recycling facility for a magnesium alloy according to configuration 6, wherein
the solidification means is a means for casting the mixed molten material of aluminum and the magnesium alloy scrap to obtain an Al-Mg ingot containing the Al-Mg intermetallic compound, and wherein
the recycling facility further comprises:
   (d) a composition adjustment means for mixing and melting the Al-Mg ingot and a magnesium alloy having a lower aluminum content than a final target composition to recycle the Al-Mg ingot and the magnesium alloy into a magnesium alloy having the aluminum content of the final target composition.

### [Configuration 9]

The recycling facility for a magnesium alloy according to configuration 8, wherein
the recycling facility further comprises:
(c) a processing means for processing the Al-Mg ingot into a granular form to obtain Al-Mg particles as a granular raw material, and wherein
the composition adjustment means is a means for mixing and melting the Al-Mg particles and a magnesium alloy having a lower aluminum content than the final target composition.

### [Configuration 10]

The recycling facility for a magnesium alloy according to configuration 9, wherein the composition adjustment means is a means for mixing and melting the Al-Mg particles and magnesium alloy chips having a lower aluminum content than the final target composition by injection molding to recycle the Al-Mg particles and the magnesium alloy chips into a magnesium alloy injection-molded article having the aluminum content of the final target composition.

### [Configuration 11]

The recycling facility for a magnesium alloy according to configuration 9 or 10, wherein the processing means is a means for crushing and processing the Al-Mg ingot using an impact means.

### [Configuration 12]

The recycling facility for a magnesium alloy according to any one of configurations 5 to 11, wherein the mass proportion of aluminum with respect to the total mass of magnesium and aluminum is 42% by mass to 65% by mass.

### [Method 1]

A recycling method for a magnesium alloy, the method comprising:
(a) a melting step for melting magnesium alloy scrap in the presence of an incombustible metal that is a major element other than magnesium constituting the magnesium alloy and that is incombustible when magnesium is melted.

### [Method 2]

The recycling method for a magnesium alloy according to method 1, wherein the melting step is performed by a method for feeding the magnesium alloy scrap into the incombustible metal that has been premelted.

As described above, several preferred embodiments of the present invention have been shown and explained in detail. However, it should be understood that various changes and modifications can be made without departing from the spirit or scope of the appended claims.

This application claims priority based on Japanese Patent Application No. JP 2023-061421, filed on April 5, 2023, the entire disclosure of which is hereby incorporated.

### REFERENCE SIGNS LIST

- A:: A1070 aluminum alloy
- B:: AZ91D magnesium alloy scrap
- C:: Al-Mg (Al₁₂Mg₁₇) ingot
- D:: Al-Mg (Al₁₂Mg₁₇) particles
- E:: AM60B magnesium alloy chips
- F:: AZ91D magnesium alloy
- 1: Injection molding machine
- 2: Mold clamping device
- 3: Injection device
- 4A, 4B: Molds
- 5: Cylinder
- 6: Screw
- 7: Drive mechanism
- 8: Heater
- 9: Cover
- 10: Hopper
- 11: Injection nozzle

## Claims

1. A recycling facility for a magnesium alloy, the recycling facility comprising:
(a) a melting means for melting magnesium alloy scrap in the presence of an incombustible metal that is a major element other than magnesium constituting the magnesium alloy and that is incombustible when magnesium is melted.

2. The recycling facility for a magnesium alloy according to claim 1, wherein the incombustible metal is selected from a group consisting of aluminum and zinc.

3. The recycling facility for a magnesium alloy according to claim 2, wherein the incombustible metal is aluminum.

4. The recycling facility for a magnesium alloy according to claim 3, wherein the melting means is a means for melting aluminum and the magnesium alloy scrap such that the mass proportion of aluminum with respect to the total mass of magnesium and aluminum, including aluminum in the magnesium alloy scrap, is 33% by mass or more.

5. The recycling facility for a magnesium alloy according to claim 4, wherein the mass proportion of aluminum with respect to the total mass of magnesium and aluminum is 33% by mass to 70% by mass.

6. The recycling facility for a magnesium alloy according to claim 5, the recycling facility further comprising:
(b) a solidification means for solidifying a mixed molten material of aluminum and the magnesium alloy scrap that has been subjected to the melting means to obtain a raw material containing an Al-Mg intermetallic compound.

7. The recycling facility for a magnesium alloy according to claim 6, wherein
the solidification means is a means for solidifying the mixed molten material of aluminum and the magnesium alloy scrap by dropping the mixed molten material onto a rotating roll or into water, and wherein
the recycling facility further comprises:
(c) a processing means for processing the raw material containing the Al-Mg intermetallic compound to obtain a granular raw material containing the Al-Mg intermetallic compound; and
(d) a composition adjustment means for mixing and melting the granular raw material and magnesium alloy chips having a lower aluminum content than a final target composition by injection molding to recycle the granular raw material and the magnesium alloy chips into a magnesium alloy injection-molded article having the aluminum content of the final target composition.

8. The recycling facility for a magnesium alloy according to claim 6, wherein
the solidification means is a means for casting the mixed molten material of aluminum and the magnesium alloy scrap to obtain an Al-Mg ingot containing the Al-Mg intermetallic compound, and wherein
the recycling facility further comprises:
(d) a composition adjustment means for mixing and melting the Al-Mg ingot and a magnesium alloy having a lower aluminum content than a final target composition to recycle the Al-Mg ingot and the magnesium alloy into a magnesium alloy having the aluminum content of the final target composition.

9. The recycling facility for a magnesium alloy according to claim 8, wherein
the recycling facility further comprises:
(c) a processing means for processing the Al-Mg ingot into a granular form to obtain Al-Mg particles as a granular raw material, and wherein
the composition adjustment means is a means for mixing and melting the Al-Mg particles and a magnesium alloy having a lower aluminum content than the final target composition.

10. The recycling facility for a magnesium alloy according to claim 9, wherein the composition adjustment means is a means for mixing and melting the Al-Mg particles and magnesium alloy chips having a lower aluminum content than the final target composition by injection molding to recycle the Al-Mg particles and the magnesium alloy chips into a magnesium alloy injection-molded article having the aluminum content of the final target composition.

11. The recycling facility for a magnesium alloy according to claim 9, wherein the processing means is a means for crushing and processing the Al-Mg ingot using an impact means.

12. The recycling facility for a magnesium alloy according to any one of claims 5 to 11, wherein the mass proportion of aluminum with respect to the total mass of magnesium and aluminum is 42% by mass to 65% by mass.

13. A recycling method for a magnesium alloy, the method comprising:
(a) a melting step for melting magnesium alloy scrap in the presence of an incombustible metal that is a major element other than magnesium constituting the magnesium alloy and that is incombustible when magnesium is melted.

14. The recycling method for a magnesium alloy according to claim 13, wherein the melting step is performed by a method for feeding the magnesium alloy scrap into the incombustible metal that has been premelted.
